Europäisches Patentamt

European Patent Office

Office européen des brevets

(11) Publication number: **0 293 109 B1**

## EUROPEAN PATENT SPECIFICATION

(45) Date of publication of patent specification: **15.07.92**  (51) Int. Cl.⁵: **B64G 9/00**, E04H 12/18

(21) Application number: **88304341.6**

(22) Date of filing: **13.05.88**

(54) **Truss structure.**

(30) Priority: **18.05.87 US 51743**

(43) Date of publication of application:
**30.11.88 Bulletin  88/48**

(45) Publication of the grant of the patent:
**15.07.92 Bulletin  92/29**

(84) Designated Contracting States:
**DE FR GB NL**

(56) References cited:
**US-A- 4 599 832**

(73) Proprietor: **ASTRO AEROSPACE CORPORATION**
**6384 Via Real**
**Carpinteria, CA 93013(US)**

(72) Inventor: **Adams Louis R.**
**77 West Willey Street**
**Ojai, CA 93023(US)**

(74) Representative: **Lewis, Samuel Hewitt et al**
**FORRESTER & BOEHMERT Franz-Joseph-Strasse 38**
**W-8000 München 40(DE)**

## Description

This invention relates to truss structures and, more particularly, to deployable truss structures desirable for space applications.

A truss structure is generally composed of straight members subject only to longitudinal compression, tension or both; the members are disposed so as to make the structure rigid under anticipated loads. Truss members include longerons (longitudinal members); battens (typically short members perpendicular to at least one longeron); and diagonals (bracing members). Typically, the batten members are connected end-to-end to form a batten frame; the batten frames are then joined to each other by the longitudinal members, which are usually attached to the batten frames at the end of the batten members. The diagonals typically are joined between batten frames to opposite longerons.

Truss structures are particularly desirable in space applications because of their high strength and/or stiffness and low mass. The stiffness-to-mass ratio of truss structures may be further increased by the use of composite materials as truss members. The inherently repetitive configuration of truss structures makes efficient packaging possible, allowing the members to be joined by hinges that allow the structure to fold or collapse for compact and efficient storage.

Packaging a truss structure by the use of hinges introduces joint compliance, thereby decreasing the stiffness of the truss. In order to optimise stiffness and strength, the number of hinges should be minimised. Some minimisation is achieved by the use of single-degree-of-freedom hinges for complex rotations rather than using ball and socket joints or hinged pairs. Further minimisation of hinges may be obtained from designing the truss so that structurally significant truss members (those that affect the bending stiffness) do not hinge except at member junctions (which are referred to as truss nodal positions); these significant truss members are also made relatively long.

Single-degree-of-freedom hinges are generally utilised either by having two truss members hinged directly to each other at their ends, or by having two truss members each hinged at their ends to a single common joint structure. The use of single-degree-of-freedom hinges often introduces strain in the truss members during the transition between the collapsed and deployed configurations (which themselves are not strained). The strain during transition arises because a pair of hinges which are at opposite ends of a truss member change in angular orientation with respect to each other. This change in angular orientation is a natural consequence of the design evolution whereby non-folding longerons require batten frame rotation for packaging. It is therefore desirable to reduce or eliminate such strain and joint compliance, while optimising stiffness in a folding truss structure.

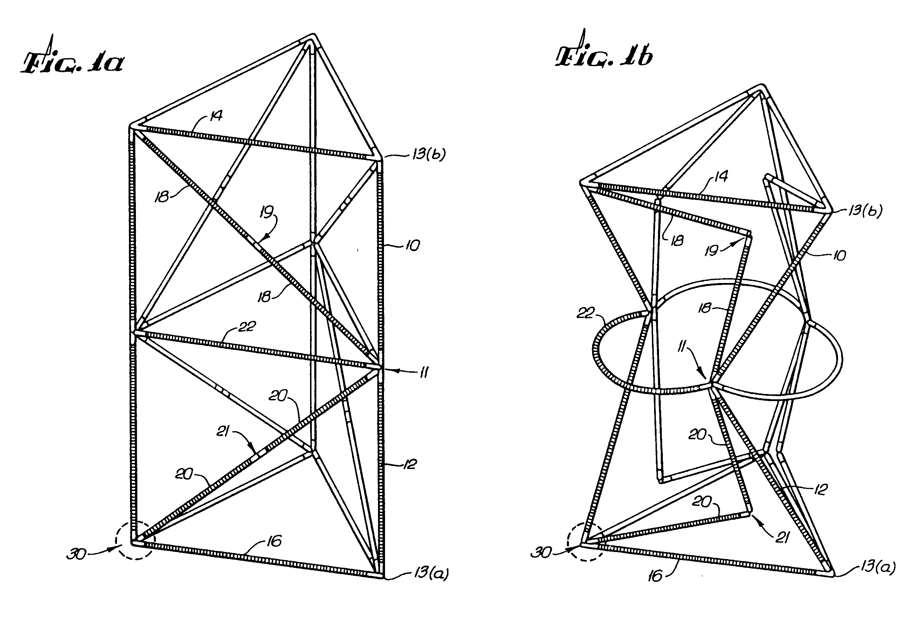

US Patent 4599832 to Benton et al describes extendable structures which can be collapsed to a shorter length or extended to a longer length. The structures described by Benton et al., e.g. as shown in Figure 1 of the reference, include four rigid members 19-22 connected at their end points to form a square. Longeron elements 30, 32, 34 and 36 each extend from a respective corner of the square. Four buckling springs 75-78 are connected at their ends to the longeron elements 30, 32, 34 and 36. A second set of four longeron elements 29, 31, 33 and 35 extend from the connections of the buckling springs 75-78 with the longeron elements 30, 32, 34 and 36. Four rigid elements 15-18 are connected at their end points to form a square and are connected, at the corners of the square, to the longeron elements 29, 31, 33 and 35. The buckling springs 75-78 are slightly bowed outward from the structure so as to exert an outwardly directed force at the joints of the longeron elements and the buckling springs. Since these joints are continuously urged outward chains or cables 85-88 must be connected between each joint being urged outward, and a joint arranged at a diagonal relationship thereto.

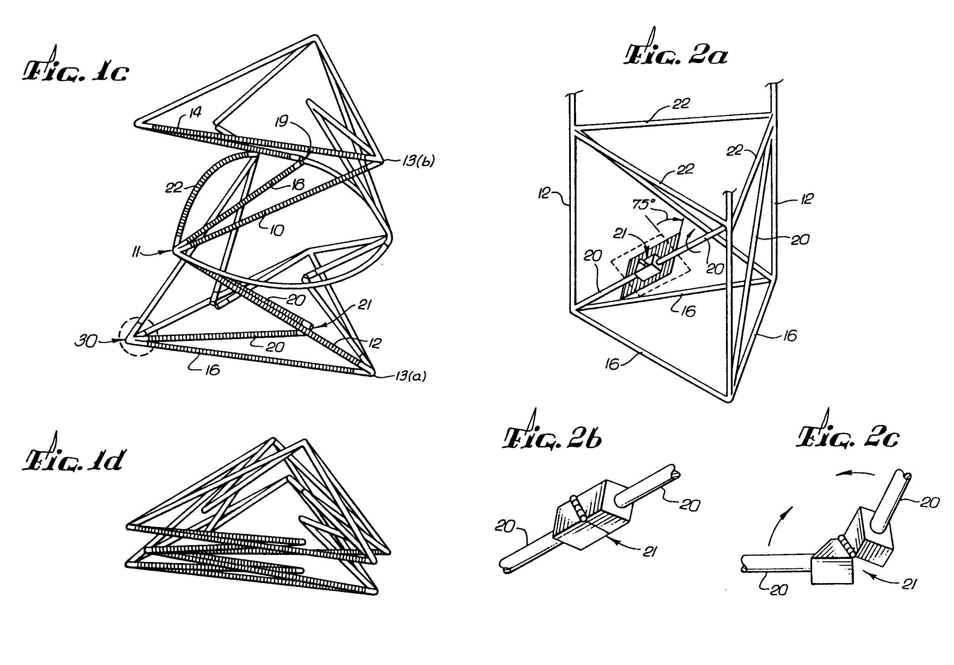

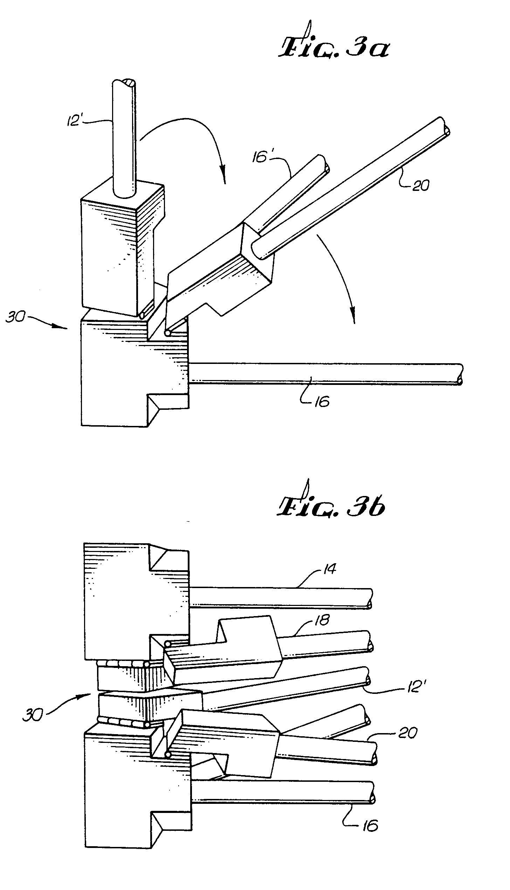

Figure 2 of the Benton et al reference shows a structure in a partially collapsed state and Figure 3 shows a structure in a fully collapsed state. As apparent from each of these figures, buckling springs 75-78 are bent or buckled to a great extent while the structure is being collapsed and while the structure is in a collapsed state. Referring to Figure 1, these buckling springs are partially buckled or bent even when the structure is in a fully deployed state. In this regard, buckling springs 75-78 are always under some tension and appear to be under a great deal of tension when the structure is in a collapsed state. This tension is transferred to the ends of the buckling springs and, therefore, to the joints between the buckling springs and the longeron elements. Such a continuing tension on the buckling springs and joints can cause these elements to wear out and/or break.

The present invention provides a truss structure as defined in Claim 1 appended hereto.

In a preferred embodiment of the invention, the problems described above are reduced or overcome by providing a truss structure having two batten frames constructed of rigid batten members spaced apart longitudinally on opposite sides of a mid-structure batten frame. This batten frame rotates for collapsing the truss structure, but the common joints at which the batten frame members are connected to the longerons do not pivot or rotate for packaging. The mid-structure batten members are non-rigid, having end hinges which are parallel to the beam axis, and having either a parallel hinge near its centre or having sufficiently flexible composition to allow for packaging without folding.

A basic sub-structure of an example of truss structure embodying the present invention is formed by a pair of longerons, upper and lower rigid battens, and two folding diagonals. The longerons are joined at their ends to a common joint structure by hinges that are oriented perpendicular to the plane defined by the packaged and deployed longeron directions. Each diagonal is joined by a hinge at one end to the junction of the longerons, and at its other end is joined by a hinge to the free end of a rigid batten. Three such sub-structures are joined at their batten member ends to form the basic truss structure, which thus has a triangular cross-section. The sub-structures are further interconnected at their longitudinal mid-points (the junction of the longerons) by non-rigid batten members, one such batten for each face of the structure. The basic sub-structures each define a plane when deployed and, during the transition between collapsed and deployed positions, the forming members remain approximately parallel to this plane. All hinges of the sub-structure, except for those of the non-rigid batten, remain approximately perpendicular to this plane.

Many of these sub-structures can be placed in a line to form a truss structure. All of the longerons located along a corner of such a truss structure are hinged identically. The longerons are not subject to strain as they move from the collapsed to the deployed configuration.

Each diagonal member is hinged at three places: at each end and near its midpoint. Diagonal hinge orientations are given on either end by the cross product of two vectors, as follows. One of these vectors is the difference between the two unit vectors which define the packaged and deployed centerline directions. The other vector is the difference between the two unit vectors that define the orientations of some other feature of the strut, such as the mid hinge. The collapsed orientation of the diagonal mid hinge is preferrably in the plane of the batten, but also may have a different orientation. The deployed orientation of the diagonal mid hinge is preferrably rotated 75 degrees about the diagonal center line, away from the batten-diagonal plane, but may be oriented in other configurations. The preferred orientations described are consistent with a minimum strain design.

The diagonals are hinged to non-rotating joints, as are the longerons. The flexible batten members themselves may be constructed of tubular aluminum, or may be of a coiled construction, or any other composition that may be flexed and still maintain rigidity when unstrained.

## BRIEF DESCRIPTION OF THE DRAWINGS

FIGURES 1(a)-1(d) show a perspective view of a beam structure in accordance with the preferred embodiment of the present invention from fully deployed to fully collapsed. Like reference numerals in the drawings represent like elements.

FIGURES 2(a), 2(b), and 2(c) show a perspective view of a detail of a diagonal hinge.

FIGURES 3(a) and 3(b) shows a perspective view of a detail of a base hinge.

FIGURE 4 shows a perspective view of a detail of a common joint hinge.

FIGURE 1 shows a truss structure constructed in accordance with the present invention. FIGURE 1(a) shows the structure in an initial deployed configuration, while FIGURES 1(b), 1(c), and 1(d) show the structure as it is changed to its collapsed configuration. The structure has a triangular cross section. The longitudinal faces of the truss structure are defined by a basic sub-structure. The sub-structure is comprised of two longerons 10, 12 joined together end-to-end by a common hinge joint 11, and each longeron 10, 12 is coupled to a respective rigid batten 14, 16 oriented perpendicularly to the longerons. Each longeron 12, 10 is joined to a rigid batten by a batten-longeron hinge 13(a), 13(b), respectively. All of the hinges used in the preferred embodiment are single-degree-of-freedom hinges. The single-degree-of-freedom hinges are preferably of the type disclosed in a co-pending application by the present inventor for a Collapsible Truss Structure, Serial No. 42162 filed April 23, 1987. Two folding diagonal members 18, 20 are joined to the other ends of the batten members and to the common joint 11 of the two longerons, the common joint 11 being located at the midsection of the sub-structure.

Each diagonal member 18, 20 is hinged approximately at its midpoint; the hinge for diagonal member 18 is indicated in FIGURE 1(a) by reference numeral 19, the hinge for diagonal member 20 is indicated in FIGURE 1(a) by reference numeral 21. During the transition of the truss structure between the deployed condition and the collapsed condition, the movement of the diagonal members 18, 20 remain close to the plane defined by the sub-structure in its deployed configuration.

An additional frame member for each sub-structure is a non-rigid batten 22 that connects the common joint 11 of the two longerons 10, 12 of one sub-structure to the common joint 11 of the two longerons of another sub-structure. It is shown in the accompanying drawings as a flexible member that bows outward, but could alternatively have a hinge that allows folding, thereby allowing the non-rigid batten to be a segmented member. The non-rigid batten-longeron joint does not rotate. The non-rigid batten member allows the other frame members to be constructed as rigid segments, joined by single-degree-of-freedom hinges so as to be articulated in the manner necessary. In this way, the present structure maintains its minimal strain upon members with reduced hinge compliance. The truss structure of the present invention basically comprises three sub-structures joined together in a triangular cross-section configuration, as shown in FIGURE 1(a). Only one illustrated substructure will be described in detail, although it should be apparent to one skilled in the art that the description applies equally to the remaining substructures .

As can be seen in FIGURE 1(b), one collapses the truss structure by folding the diagonal members at their midpoint hinges 19 and 21. Each diagonal member is associated with a rigid batten member and a longeron. Folding a diagonal member at its mid-point hinge allows each rigid batten member and longeron to pivot about the batten-longeron hinge 13, which in turn causes the non-rigid battens to bow outward. The non-rigid battens continue to be bowed outward during the transition between the fully deployed and fully collapsed conditions, as illustrated in FIGURES 1(b) and 1(c). Once the truss structure is in its completely collapsed condition, the non-rigid batten member regains its fully extended, non-strained length.

FIGURE 2 shows a detail of a diagonal hinge 21. The diagonal 20 is hinged at approximately its midpoint. As noted, the hinge 24 is a single-degree-of-freedom hinge. As indicated in FIGURE 2, the hinge 21 is oriented along an axis in a plane inclined approximately 75 degrees from the plane in which the deployed folding diagonal is located. The preferred embodiment illustrated provides a minimum-strain design.

FIGURE 3 shows a detail of one corner of the truss structure showing the relative positions of the various frame members. FIGURE 3(a) shows a deployed configuration, with a rigid batten 16 and diagonal 20 of one sub-structure shown connected to a longeron 12′ and rigid batten 16′ of a second sub-structure. The truss structure is shown in its collapsed position in FIGURE 3(b). This corner corresponds to the corner 30 shown in FIGURE 1-(a). The rigid batten members 14, 16 are maintained parallel relative to each other. The details of the hinges themselves may vary from the example illustrated. FIGURE 3 is merely intended to show the relative positions of the frame members in the deployed and collapsed positions.

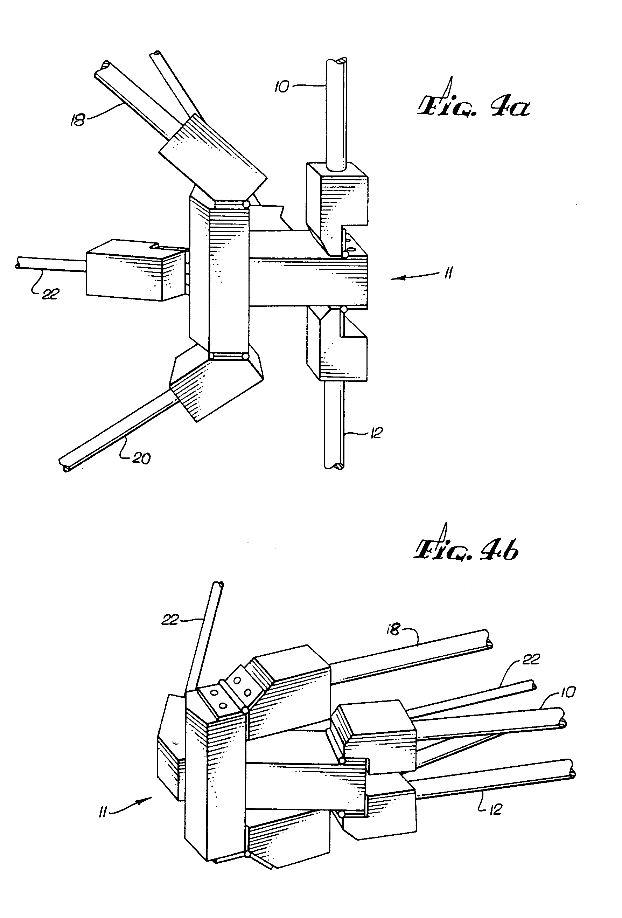

FIGURE 4 shows a detail of a common hinge joint showing the relative position of the various frame members. FIGURE 4(a) shows a deployed configuration, with a longeron 10 and diagonal 19 of one sub-structure shown connected to a longeron 12 and diagonal 20 of another sub-structure. The truss structure is shown in its collapsed condition in FIGURE 4(b). This common hinge joint corresponds to the joint 11 shown in FIGURE 1(a). The common hinge joint 11 is a single structure to which the individual truss members are joined by means of hinges. The details of the hinges themselves may vary from the example illustrated. FIGURE 4 is merely intended to show the relative positions of the frame members in the deployed and collapsed positions.

## Claims

1. A truss structure movable between a collapsed condition and a deployed condition, having:

   at least one frame unit, each frame unit comprised of three diagonal members (18), three rigid batten members (14), three rigid longeron members (10) and three non-rigid batten members (22);

   the three rigid batten members being connected at their end points so as to form an equilateral triangle;

   each longeron member (10) being pivotally connected at a first end to an associated rigid batten member (14) at each point (13b) of the triangle such that the longeron member pivots about an axis perpendicular to the plane defined by its deployed and collapsed longitudinal axes and such that, in the deployed condition, each longeron member is perpendicular to the plane defined by the triangle;

   each diagonal (18) being hinged approximately at its mid-point and being hinged at its one end to the second end of the longeron member (10) opposite the latter's connection (13b) to the associated rigid batten member (14), and at its other end to the end of the rigid batten member (14) opposite said connection (13b), with each hinge approximately parallel to those of the longeron member;

   each non-rigid batten member (22) being joined at one end to one diagonal-longeron member junction of the frame unit, and at the other end to an adjacent diagonal-longeron member junction of the frame unit; and

   the non-rigid batten members (22) being substantially unstrained and fully extended when the truss structure is in the deployed condition and when the truss structure is in the completely collapsed condition.

2. A truss structure according to Claim 1 comprising three further rigid batten members (16), three further longeron members (12) and three further diagonal members (20); the further rigid batten members being connected end-to-end to form a further equilateral triangle; each longeron member (10) being connected, at its end opposite the longeron member to rigid batten member connection, to one end of a further longeron member (12) by a hinge joint (11); each further longeron member (12) being connected, at its other end, to the further equilateral triangle and each further diagonal member being hinged approximately at its mid-point, being connected at a first end to a longeron member to further longeron member hinge joint (11) and at a second end to a further longeron member to further rigid batten member joint (13a).

3. A truss structure according to Claim 1 or Claim 2 wherein the hinge joints consist of single degree of freedom hinges.

4. A truss structure according to any preceding claim wherein, when the structure is in an intermediate condition, the non-rigid batten members (22) are outwardly bowed.

5. A truss structure according to any preceding claim wherein the hinge of each diagonal defines a hinge axis which, when the structure is in the deployed condition, lies in a plane which is inclined at approximately 75° to the plane containing adjacent longeron members.

**Revendications**

1. Structure réticulée modifiable entre un état plié et un état déplié, comportant :

au moins un module d'ossature, chaque module d'ossature étant constitué de trois éléments formant étrésillon (18), trois éléments formant traverses rigides (14), trois éléments formant longerons rigides (10) et trois éléments formant traverses non-rigides (22) ;

les trois traverses rigides étant reliées à leurs points d'extrémité de manière à former un triangle équilatéral ;

chaque longeron (10) étant relié de façon pivotante à une première extrémité à une traverse rigide associée (14) à chaque sommet (13b) du triangle de telle sorte que le longeron pivote autour d'un axe perpendiculaire au plan défini par son axe longitudinal dans l'état déplié et son axe longitudinal dans l'état plié et de telle sorte que, dans l'état déplié, chaque longeron soit perpendiculaire au plan défini par le triangle ;

chaque étrésillon (18) étant articulé approximativement en son point médian et étant articulé à une de ses extrémités sur la seconde extrémité du longeron (10) située à l'opposé du point de raccordement (13b) où ce dernier se raccorde à la traverse rigide associée (14), et à son autre extrémité sur l'extrémité de la traverse rigide (14) située à l'opposé du point de raccordement (13b), chaque articulation étant à peu près parallèle à celles du longeron ;

chaque traverse non-rigide (22) étant assemblée à une de ses extrémités à une des jonctions d'étrésillonlongeron du module d'ossature et à son autre extrémité à une jonction adjacente étrésillon-longeron du module d'ossature ; et

les traverses non-rigides (22) étant sensiblement exemptes de contraintes et totalement allongées, c'est-à-dire rectilignes, lorsque la structure réticulée est dans l'état déplié et lorsque la structure réticulée est dans l'état complètement plié.

2. Structure réticulée selon la revendication 1, comprenant trois autres éléments formant traverses rigides (16), trois autres éléments formant longerons (12) et trois autres éléments formant étrésillons (20) ; les autres longerons rigides étant reliés bout-à-bout de manière à former un autre triangle équilatéral ; chaque longeron (10) étant relié, à son extrémité située à l'opposé de la liaison longeron-traverse rigide, à une des extrémités d'un autre longeron (12) par un joint articulé (11) ; chaque autre longeron (12) étant relié, à son autre extrémité, à l'autre triangle équilatéral et chaque autre étrésillon étant articulé à peu près en son point médian et étant relié à une première extrémité à un joint (11) articulé longeron-autre longeron et à une seconde extrémité à un joint (13a) autre longeron-autre étrésillon rigide.

3. Structure réticulée selon la revendication 1 ou la revendication 2, dans laquelle les joints articulés consistent en des joints articulés à un seul degré de liberté.

4. Structure réticulée selon l'une quelconque des revendications précédentes, dans laquelle, lorsque la structure se trouve dans un état intermédiaire, les traverses non-rigides (22) sont cintrées vers l'extérieur.

5. Structure réticulée selon l'une quelconque des revendications précédentes, dans laquelle l'articulation de chaque étrésillon définit un axe géométrique d'articulation qui, lorsque la structure se trouve dans l'état déplié, est situé dans un plan qui est incliné d'environ 75° par rapport au plan contenant les longerons adjacents.

## Patentansprüche

1. Strebenstruktur, die zwischen einem zusammengefalteten Zustand und einem entfalteten Zustand beweglich ist, mit:
   - wenigstens einer Rahmeneinheit, die (jeweils) aus drei Diagonalelementen (18), drei steifen Verbindungselementen (14), drei steifen Längselementen (10) und drei nicht steifen Verbindungselementen (22) besteht (bestehen);
   - wobei die drei steifen Verbindungselemente an ihren Endpunkten unter Bildung eines gleichseitigen Dreiecks miteinander verbunden sind;
   - jedes Längselement (10) schwenkbar an einem ersten Ende mit einem zugehörigen steifen Verbindungselement (14) an jedem der Eckpunkte (13b) dem Dreiecks derart verbunden ist, daß das Längselement um eine Achse schwenkt, die senkrecht zu der Ebene verläuft, die durch die entfaltete und durch die zusammengefaltete Längsachse definiert ist und derart, daß jedes Längselement in dem entfalteten Zustand senkrecht zu der Ebene, die durch das Dreieck definiert wird, verläuft;
   - wobei jedes Diagonalelement (18) etwa in seiner Mitte mit einem Scharniergelenk versehen ist und an seinem einen Ende mit dem anderen, der Verbindung (13b) des Längselements (10) mit dem zugehörigen steifen Verbindungselement (14) gegenüberliegenden Ende angelenkt ist, und an seinem anderen Ende an das der Verbindung (13b) gegenüberliegenden Ende des steifen Verbindungselements (14) angelenkt ist, wobei jedes der Scharniergelenke im wesentlichen parallel zu demjenigen des Längselements ist;
   - wobei jedes der nicht steifen Verbindungselemente (22) an einem Ende mit einer Diagonal/Längs-Elementenverbindung der Rahmeneinheit verbunden ist und an dem anderen Ende mit einer benachbarten Diagonal/Längs-Elementverbindung der Rahmeneinheit verbunden ist, und
   - wobei die nicht steifen Verbindungselemente (22) im wesentlichen ungespannt und voll erstreckt sind, wenn die Strebenstruktur in dem entfalteten Zustand ist und wenn die Strebenstruktur in dem vollständig zusammengefalteten Zustand ist.

2. Strebenstruktur nach Anspruch 1, mit drei weiteren steifen Verbindungselementen (16), drei weiteren Längselementen (12) und drei weiteren Diagonalelementen (20), wobei die weiteren steifen Verbindungselemente zur Bildung eines weiteren gleichseitigen Dreiecks an ihren Enden miteinander verbunden sind, jedes der Längselemente (10) an seinem der Verbindung des Längselements mit dem steifen Verbindungselement gegenüberliegende Ende mit einem Ende eines der weiteren Längselemente (12) über eine Gelenkverbindung (11) verbunden ist; jedes der weiteren Längselemente (12) an seinem anderen Ende mit einem weiteren gleichzeitigen Dreieck verbunden ist und jedes der weiteren Diagonalelemente etwa in seiner Mitte mit einem Gelenkscharnier versehen ist und an einem ersten Ende mit einem Längselement an einem weiteren Längselementscharniergelenk (11) und an einem zweiten Ende mit einem weiteren Längselement über ein weiteres Gelenk (13a) für eine steifes Verbindungselement verbunden ist.

3. Strebenstruktur nach Anspruch 1 und Anspruch 2, wobei die Gelenke solche mit nur einem Freiheitsgrad sind.

4. Strebenstruktur nach einem der vorangehenden Ansprüche, wobei die nicht steifen Verbindungselemente (22) in einer Zwischenposition der Struktur nach außen ausgebogen sind.

5. Strebenstrucktur nach einem der vorangehenden Ansprüche, wobei die Gelenke jedes der Diagonalelemente eine Gelenkachse definieren, die in dem entfalteten Zustand der Struktur in einer Ebene liegen, die etwa 75° zu der Ebene geneigt ist, die die benachbarten Längselemente beinhaltet.

FIG. 1a

FIG. 1b

Fig. 1c

Fig. 1d

Fig. 2a

Fig. 2b

Fig. 2c

EP 0 293 109 B1

# Fig. 3a

# Fig. 3b

*Fig. 4a*

*Fig. 4b*